# EUROPEAN PATENT APPLICATION

(11) **EP 3 324 092 A1**
(43) Date of publication of application: **23.05.2018**
(21) Application number: 17202079.4
(22) Date of filing: 16.11.2017
(51) Int. Cl.: F16L 58/10, F16L 55/165

(54) **REINFORCED TUBE AND METHOD OF RELINING A CULVERT WITH SUCH A TUBE**

(30) Priority: 18.11.2016 SE 1651507
(71) Applicant: Railcare Group AB, 932 32 Skelleftehamn (SE)
(72) Inventor: Marklund, Ulf, 93291 Bureå (SE)
(74) Representative: Ehrner & Delmar Patentbyrå AB

(57) **Abstract**

A tubular arrangement (10) for relining a duct (14), the arrangement comprising a fibre-reinforced plastic tube (11) extending in an axial direction (A). Rings (12) are arranged at a substantially regular interval radially outside of the fibre-reinforced plastic tube, wherein the fibre-reinforced plastic tube (11) encloses at least part of the rings (12) and has a reduced inner diameter to house each position where a ring (12) is enclosed.

## Description

### TECHNICAL FIELD

The invention relates to a reinforced tube and a method of relining a duct, culvert, pipe or the like with such a tube. Specifically, the invention relates to a blow injected fibre-reinforced plastic tube that is cured at location inside the duct that is to be relined.

### BACKGROUND

In piping, it is today common practice to reline ducts, culverts, pipes or the like with an internal tube or lining instead of replacing such ducts, culverts, pipes or the like that for various reason needs maintenance. Often it is impossible or at least very costly to replace such ducts, culverts, pipes or the like. Therefore, the provision of an internal relining inside the ducts, culverts, pipes or the like offers a good alternative.

An efficient manner of relining a duct is to introduce a length of e.g. a fibre-reinforced plastic tube and to blow cure said tube towards the inside of the pipe or culvert. This method functions very well for pipes that are not exposed to outer forces. However, for larger pipes or culverts, such as rain-water ducts under roads or rail tracks a reinforcement may be needed to make sure that the lining will withstand a certain external pressure.

Conventionally, such ducts, culverts, pipes or the like may need to be reinforced in addition to the relining. Therefore, such arrangements are cumbersome and expensive.

Hence there is a need of a reinforced tube adapted for relining large ducts, culverts, pipes or the like, typically between one and two metres in diameter.

### SUMMARY OF THE INVENTION

It is an object of the present invention to provide an improved reinforced tube and a method of relining ducts, culverts, pipes or the like with such a tubular arrangement.

According to a first aspect the invention relates to a tubular arrangement for relining a duct or the like, the arrangement comprising a fibre-reinforced plastic tube extending in an axial direction. Rings are arranged at a substantially regular interval radially outside of the fibre-reinforced plastic tube, the fibre-reinforced plastic tube enclosing at least part of each ring and having a reduced inner diameter at each position where a ring is enclosed, so as to at least partly enclose said ring (12).

With the inventive arrangement a tubular arrangement with markedly improved mechanical properties is provided.

According to a second aspect the invention relates to a method of relining a duct with a fibre-reinforced plastic tube, the method comprising the steps in arranging rings at a substantially regular interval inside a duct to be relined; providing a tube of fibre-reinforced plastic in an expanded position inside said duct, towards the inner wall of the surrounding duct and thereby at least partly enclosing the rings; and curing the tube of fibre-reinforced plastic in said expanded position.

In a specific embodiment of the inventive method the tube of fibre-reinforced plastic is provided by spray coating the inside wall of the duct.

In another specific embodiment of the inventive method the step of providing a tube inside the duct is performed by introducing a tube of uncured fibre-reinforced plastic into the duct to be relined; followed by expanding the tube of uncured fibre-reinforced plastic towards the inner wall of the surrounding duct and thereby at least partly enclosing the rings; and curing the tube of fibre-reinforced plastic in said expanded position.

In this embodiment the rings may be arranged inside the duct as a first step of the method, i.e. before the tube of uncured fibre-reinforced plastic is introduced into the duct to be relined.

The step of expanding the tube is preferably made by applying an overpressure inside the tube, and the curing is preferably performed when the tube is exposed to said overpressure.

Other embodiments and advantages will be apparent from the following detailed description of the invention, the dependent claims and the appended drawings.

### BRIEF DESCRIPTION OF DRAWINGS

An exemplary embodiment related to the invention will now be described with reference to the appended drawings, of which;
- Fig. 1: shows a cut perspective view of a duct relined in accordance with the inventive method;
- Fig. 2: shows a cut view from inside of a duct relined in accordance with the inventive method;
- Fig. 3: shows a detailed view of the relined duct of fig. 2;
- Fig. 4: shows a closely detailed view of the relined duct of fig. 2; and
- Fig. 5: is a schematic block diagram illustrating the steps of the inventive method.

### DETAILED DESCRIPTION OF EMBODIMENTS

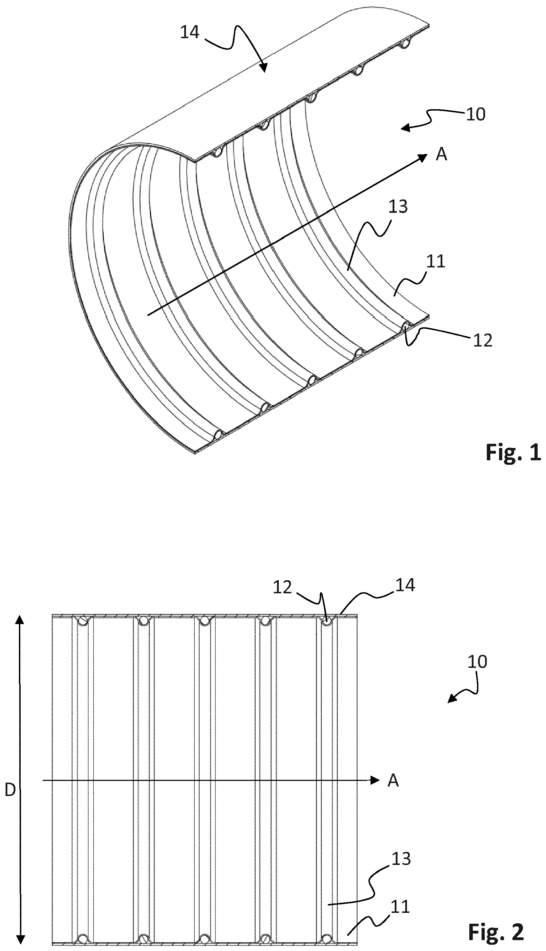

In Figures 1-4 a duct 14 that has been relined with a tubular arrangement 10 in accordance with the invention is shown. The tubular arrangement 10 comprises a fibre-reinforced plastic tube 11 extending in an axial direction A. Rings 12 are arranged at a substantially regular interval radially outside of the fibre-reinforced plastic tube 11. The fibre-reinforced plastic tube 11 thereby encloses at least part of the rings 12 and has a reduced inner diameter to house each position where a ring 12 is enclosed.

The fibre-reinforced plastic tube 11 is comprised of plastic material, such as e.g. PE, with embedded fibres of e.g. carbon fibres, glass fibres or the like. The fibre-reinforced plastic tube in itself is known to the skilled person and is therefore not described in detail in this specification.

The diameter D of the fibre-reinforced plastic tube 11 is adapted to the diameter of the duct to be relined and typically the diameter D is 800, 1000, 1200, 1400 1600, 1800, or 2000 mm. Hence the inventive method and tubular arrangement is especially adapted to a diameter **D** of the fibre-reinforced plastic tube of 800 mm or more, preferably 1200 mm or more, and to a diameter **D** of the fibre-reinforced plastic tube of 2000 mm or less, preferably about 1800 mm or less.

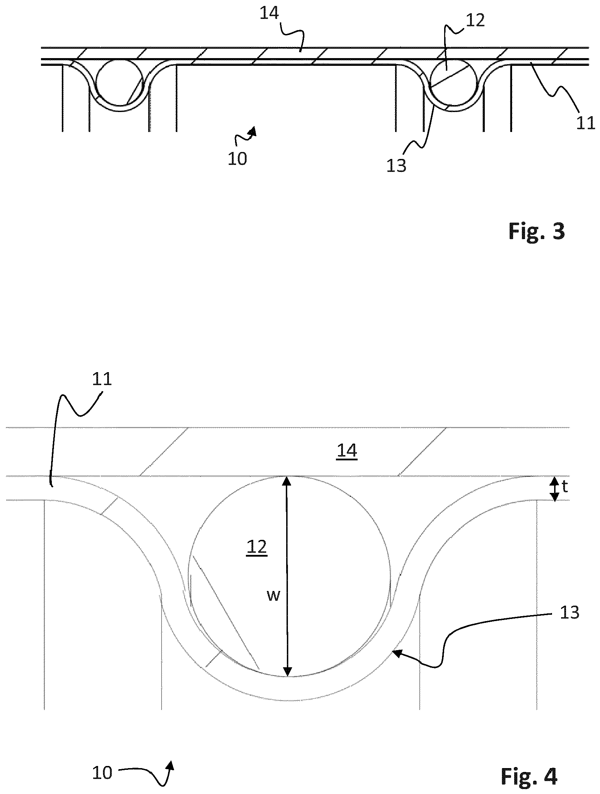

In figure 4, a schematic view of the dimensions of the geometry of the tube is shown. The wall thickness **t** of the tube is preferably more than 5 mm, more preferably more than 8 mm. Further, the wall thickness **t** is preferably less than 20 mm, more preferably less than 15 mm.

Preferably, the fibre-reinforced plastic tube 11 has a substantially constant wall thickness **t**. Further, the rings 12 have a diameter or width **w** that exceeds said substantially constant wall thickness **t** of the fibre-reinforced plastic tube 11. Hence the width **w** of the rings 12 is preferable more than 15 mm, more than 20, 25 or more than 30 mm. Further, the width **w** of the rings 12 is preferable less than 50 mm, 45 mm, or less than 40 mm. The ratio **w/t** between the width **w** of a ring 12 and the wall thickness **t** of the fibre-reinforced plastic tube 11 is preferably more than 3 to 2, 2 to 1, 5 to 2 or more than 3 to 1. Further, said ratio **w/t** is preferably less than 6 to 1, 5 to 1 or less than 4 to 1. The fibre-reinforced plastic tube 11 enclose the rings 12 so as to substantially lie against the duct 14 to be relined between the rings 12, except for local irregularities and a relatively small portion adjacent each ring 12.

The undulations 13 formed by the parts of fibre-reinforced plastic tube 11 that enclose the rings 12 strengthen the construction of the fibre-reinforced plastic tube 11, such that it will be much more rigid and have an increased resistance to outer stress.

The fact the fibre-reinforced plastic tube 11 encloses at least part of the rings 12 is to be construed as that the outer diameter of the fibre-reinforced plastic tube 11 is greater than the inner diameter of the rings over substantially the whole length of the fibre-reinforced plastic tube 11, such that inwardly extending undulations 13 are formed at each position where a ring 12 is located. Hence, the outside of the fibre-reinforced plastic tube 11 surrounds each ring 12, such that each ring is embedded between the wall of the duct 14 at one side and by undulations 13 formed by the parts of fibre-reinforced plastic tube 11 on the other side. The undulations 13 are typically arranged to lie against part of the circumference of each ring, typically about a quarter of the circumference up to a half of the circumference of each ring.

The fibres of the fibre-reinforced plastic tube 11 are preferably arranged in a circumferential direction parallel to the direction of the rings 12 and orthogonal to the axial direction A of the tube. This is advantageous as the fibres thereby will not incur negatively on the flexibility of the tube's ability to closely enclose the rings 12. Namely, the fibres are less flexible in their length direction, which hence is the circumferential direction of the tube 11.

The rings 12 may preferably be comprised of plastic or rubber tubes, which preferably are hollow. In the embodiments shown in in the figures the rings are however solid. Nevertheless, it is the undulations 13 that strengthen the construction and not the rings 12 in their selves. Therefore, the structure of the rings 12 is not of uttermost importance.

In order to achieve an optimal strength the rings 12 should be arranged at a regular interval with a balanced distance between them. Preferably, the rings 12 are arranged at a substantially regular interval with respect to each other of less than 1 meter, and more preferably of less than 60 centimetres. Further, the distance between the rings should be such that there are portions between the rings with straight walls, lying against the duct 14 that is relined. Hence, the distance between the rings should at minimum be as large be as the width **w** of the rings 12. Preferably though, to optimise the method of arranging the arrangement, the rings 12 are arranged at a substantially regular interval with respect to each other of more than 10 centimetres, more preferably at a substantially regular interval with respect to each other of more than 20 centimetres.

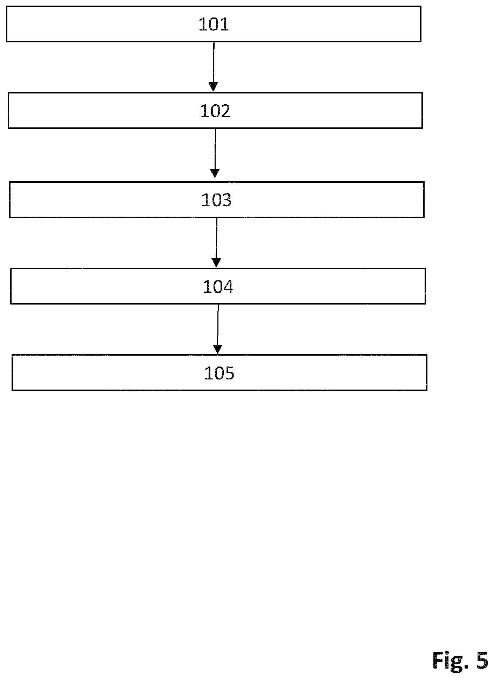

Now, with reference to figure 5, a method of relining a duct with a fibreglass tube in accordance with the invention will be described.

As a first step **101** of the method rings 12 are arranged at a substantially regular interval outside a fibreglass tube 11. Typically, this step may be achieved in that rings 12 are attached to the duct 14 that is to be relined. Often, the duct is of such a size, with a diameter of more than 1 meter, that an operator may enter the duct and fasten rings 12, e.g. by screwing them into the duct 14, at regular intervals. Preferably, the rings are in fact hoses that have been pre-cut to lengths corresponding to a full lap of the inside perimeter of the duct. It is however not crucial that the length of the hoses correspond exactly to one full lap. If the hoses are too short a short gap between the ends is acceptable, and if the hoses are longer than a full lap the ends may very well overlap each other for a portion of a lap, or they may be cut at location to an optimal length. Also, the hoses may be cut at location from e.g. a hoisted hose.

The rings may also be of an adaptable length, such that they may be adapted to the diameter of the specific duct in which the rings and the fibre-reinforced plastic tube 11 is to be placed. Such rings may comprise two ends that connect to each other, e.g. one end sliding inside the other.

Once the rings 12 have been arranged inside the duct, as a second step **102**, a tube 11 of uncured fibre-reinforced plastic is introduced into the duct 14 to be relined. As an alternative the rings 12 may instead be fixed to the outside of the uncured tube 11 so as to be introduced together with the tube 11 into the duct 14.

When the tube 11 and the rings have been arranged inside the duct 14, as a third step **103** the tube 11 of uncured fibre-reinforced plastic is expanded towards the inner wall of the surrounding duct 14 and thereby at least partly enclosing the rings 12. The expansion is preferably achieved by applying an overpressure of about 0.3 Bar inside the tube 11 of uncured fibre-reinforced plastic. This is of course preceded by a step of making sure that the ends of the tube 11 are airtightly secured in order to hold the overpressure. Further, a curing machine is preferably introduced into the tube 11 before or when it is expanded.

In a subsequent step **104** the tube 11 of fibre-reinforced plastic is cured in said expanded position, and hence preferably as the overpressure is withheld inside the tube 11. The curing is achieved by means of emitters of radiation and normally one curing machine can cure about 20 metres of uncured fibre-reinforced plastic tube 11 per hour.

As a final step **105**, after the tube 11 of fibre-reinforced plastic has been cured at location, the finish of the tubular arrangement 10 is looked over. This may include a levelling of the ends of the tubular arrangement 10 and connecting them to incoming and outgoing pipes, respectively.

In an alternative embodiment of the method of relining a duct with a fibre-reinforced plastic tube, the tube is spray coated towards the inner walls of the duct 14. In this alternative method the rings 12 need to be arranged along the duct wall 14 as a first step. In a second step the plastic material is applied simultaneously as the fibres. Typically, the plastic material and the fibres may be provided from adjacent nozzles, wherein the nozzle for providing the fibres may include a cutting mechanism for cutting the fibres into lengths of the right size, typically about a few centimetres.

In this alternative method the resin material, i.e. the plastic material, need to be of a quick curing type, almost an instant curing type. It is important that the plastic cures rapidly such that it will stick to the inside of the duct to be lined, especially the upper side of said duct, and not flow or get loose. The plastic material may be of self-curing type or of a type needing to be cured by radiation, as long as it is radiated shortly after application.

A plastic foil may preferably be provided along the inside wall of the duct 14 to ameliorate attachment of the plastic material to the duct wall. As an alternative, the inside wall of the duct may be cleaned and/or spray coated with an adhesion enhancing fluid prior to the application of the fibre-reinforced plastic tube 11.

Above, the invention has been described with reference to specific embodiments. The invention is however not limited to these embodiments. It is obvious to a person skilled in the art that other embodiments are possible within the scope of the following claims.

## Claims

1. A tubular arrangement (10) for relining a duct (14), the arrangement comprising a fibre-reinforced plastic tube (11) extending in an axial direction (A), the outer wall of the fibre-reinforced plastic tube (11) being arranged to **characterised in that** rings (12) are arranged at a substantially regular interval radially outside of the fibre-reinforced plastic tube, the fibre-reinforced plastic tube (11) enclosing at least part of each ring (12) and having a reduced outer diameter at each position where a ring (12) is enclosed.

2. The arrangement (10) according to claim 1, wherein the rings (12) are arranged substantially orthogonal to the axial direction (A) of the tube (11).

3. The arrangement (10) according to claim 1 or 2, wherein the rings (12) are comprised of plastic or rubber tubes.

4. The arrangement (10) according to claim 3, wherein the rings (12) are hollow.

5. The arrangement (10) according to claim 3 or 4, wherein the fibre-reinforced plastic tube (11) has a substantially constant wall thickness (t) and wherein the rings have a width (w) that exceeds said substantially constant wall thickness (t) of the fibre-reinforced plastic tube (11).

6. The arrangement (10) according to anyone of the preceding claims, wherein the rings (12) are arranged at a substantially regular interval with respect to each other of less than 100 centimetres.

7. The arrangement (10) according to anyone of the preceding claims, wherein the rings (12) are arranged at a substantially regular interval with respect to each other of more than 10 centimetres.

8. A method of relining a duct (14) with a fibre-reinforced plastic tube (11), **characterised by** the steps of:
- [101] arranging rings (12) at a substantially regular interval inside said duct (14);
- providing a tube (11) of fibre-reinforced plastic in an expanded position inside said duct (14) towards the inner wall of the surrounding duct and thereby at least partly enclosing said rings (12),
- [104] curing the tube (11) of fibre-reinforced plastic in said expanded position, such that the fibre-reinforced plastic tube (11) encloses at least a part of each ring (12) and has a reduced inner diameter at each position where a ring (12) is enclosed.

9. The method according to claim 8, wherein the tube (11) of fibre-reinforced plastic is provided by spray coating the inside wall of the duct (14)

10. The method according to claim 8, wherein the step of providing a tube is performed by [102] introducing a tube (11) of uncured fibre-reinforced plastic into the duct to be relined; followed by
[103] expanding the tube (11) of uncured fibre-reinforced plastic towards the inner wall of the surrounding duct and thereby at least partly enclosing the rings; and [104] curing the tube (11) of fibre-reinforced plastic in said expanded position.

11. The method according to claim 10, wherein the rings (12) are arranged inside the duct (14) as a first step of the method, before the tube (11) of uncured fibre-reinforced plastic is introduced into the duct (14) to be relined.

12. The method according to anyone of claims 10 or 11, wherein the step of expanding [103] the tube 11 is made by applying an overpressure inside the tube, and wherein the curing [104] is performed when the tube is exposed to said overpressure.
